Europäisches Patentamt

**European Patent Office**

Office européen des brevets

(11) Publication number: **0 038 672**
A2

# (12) EUROPEAN PATENT APPLICATION

(21) Application number: **81301660.7**

(22) Date of filing: **15.04.81**

(51) Int. Cl.³: **G 05 B 19/04**
G 06 F 15/46, G 05 B 23/02

(30) Priority: **16.04.80 GB 8012557**

(43) Date of publication of application:
**28.10.81 Bulletin 81/43**

(84) Designated Contracting States:
**AT BE CH DE FR IT LI LU NL SE**

(71) Applicant: SERVIS DOMESTIC APPLIANCES LIMITED
Darlaston Road Kings Hill
Wednesbury West Midlands WS10 7TE(GB)

(72) Inventor: Hoyle, Donald Andrew
Overdale Linethwaite
Moor Row Cumbria(GB)

(74) Representative: Symes, Robert George et al,
FORRESTER & BOEHMERT Widenmayerstrasse 4/l
D-8000 München 22(DE)

(54) Improvements relating to control circuits in or for washing and the like machines or other apparatus.

(57) A washing machine control circuit incorporating a micro processor (10) adapted to control operation of the machine in accordance with a plurality of predetermined programmes, the micro processor including a test programme adapted to accelerate the rate of performance of at least some of the functional means in order to test the functional parts of the machine in a fast and hence efficient manner, the micro processor may incorporate sensing means adapted to sense the performance of the functional items and provide a fault signal which may indicate which of the functional items is faulty.

EP 0 038 672 A2

./...

Test

Select options and programme

Selection satisfactory? — No

Press Start

Fill cold to low level → level not reached in 24 minutes / heater o/c or heater TP/AC s/c

Fill hot to mid level → level not reached in 24 minutes / Motor Faulty

Heat water to 30°c with gentle wash action → Motor Faulty / Fails to heat in 30 mins / Thermistor faulty

Fill via fabric conditioner to high level → Level not reached in 24 minutes / Motor Faulty

Wash for 3 mins with normal wash action → Motor Faulty

Pump out water with motor at distribution speed → Motor Faulty

Pump out with motor at 450 R.P.M. for 10 seconds → water still above low level / Motor Faulty

Pump out with motor at 850 R.P.M. or 1000 R.P.M. for 10 secs → Motor Faulty

Any thermistor fault? — Yes

End

Fault code number → 1  2  3  4  5  6

stop wash programme turn off all outputs and flash 'F' with appropriate fault number

FIG 6

Title: "Improvements relating to control circuits in or
for washing and the like machines or other
apparatus.

This invention relates to a control circuit for controlling the supply of current from a source thereof to machines (hereinafter referred to as being of the kind specified) for subjecting articles to treatment involving a liquid, which machines include a plurality of functional devices energised for operation by such current.

The invention has been developed primarily for application to machines for washing clothes and other articles and dish washing machines for washing plates, cuttlery etc. and other items of tableware, each such machine comprising a body, including a chamber in which the articles can be placed for treatment, a plurality of functional means for performing respective functions during a treatment programme, and including means for effecting transfer of the liquid to and from the chamber so that it is brought into contact with, and removed from, the articles, and means for subjecting at least either the liquid or the articles to motion whilst both are in the chamber, said functional means being each electrically controlled or operated.

Thus one application of the invention is to a specific form of machine of the kind specified, namely a machine intended for washing clothes or other textile articles. In this case the means for effecting transfer of liquid to and from the chamber will normally comprise valve means operative in supply ducts for the liquid and may also include pump means for assisting discharge of the liquid from the chamber. The means for subjecting either the liquid or the articles to motion may comprise either a drum defining the chamber and which is mounted for rotation by a drive means such as an electric motor, or may comprise a paddle or impeller means for setting up flow patterns in the liquid whilst in the chamber. If a machine of the kind specified to which the invention is applied is in the form of a dish washing machine then the means for effecting transfer of the liquid to and from the chamber may again be in the form of valve means operative in one or more ducts and may further comprise pump means for effecting discharge of the liquid from the chamber. The means for subjecting either the liquid or the articles to relative motion may comprise a further pump means operating in conjunction with a liquid delivery nozzle movable or otherwise for directing the liquid onto the articles to be washed and/or may further comprise means for rotating a drum, container or holder in which such articles are supported.

In any of these forms of machine of the kind specified the sequence and/or duration, and/or mode of performance of the different operations which are carried out respectively by the functional means, or in which the latter participate, selectively comprise the treatment or programme already referred to.

Hitherto in machines of the kind specified, and more especially in clothes washing machines and dish washing machines, it has been the practice for the functional means, e.g. valves, motor-driven pumps or drive motor for a rotary drum, each to be associated with its subordinate control circuit constructed of what are commonly known as "hard wired" circuit components, that is to say individual electrical components such as resistors, capacitors, inductors and semi-conductor elements such as diodes, transistors and triacs which constrains the motor, solenoid or other instrumentality forming part of the functional means to perform in a particular predetermined mode.

The inputs to the subordinate control circuit and which control the sequence of their operation, and hence the sequence of the operation of the functional means, have heretofore been provided by the outputs of an integrated semi-conductor unit, the architecture of which has been specifically designed for a particular application, e.g. a particular series of washing machines to be produced.

Whilst control circuits embodying such an integrated circuit unit and a plurality of "hard wired" subordinate control circuits have performed satisfactorily, the nature of these circuits has hitherto precluded the provision of certain facilities which it is the object of the present invention to provide.

From one aspect there is provided, in accordance with the present invention, a control circuit in or for machines of the kind specified, said control circuit comprising programming means, adapted to furnish control signals in accordance with a selected programme to a plurality of electrically energised functional means for performing respective operations in accordance with said selected programme characterised in that said programming means includes a test programme, said test programme being adapted to accelerate the rate of performance of at least some of the functional means.

By virtue of the test programme of the present invention, the machine may be tested prior to sale in an efficient and hence economical manner. Furthermore, if a fault occurs during use of the machine, the time in which the fault can be found and corrected is considerably decreased due to the possibility of testing via the test programme, the functional parts of the machine at a greater rate than has in the past been possible.

Preferably, said control circuit further comprises sensing means adapted to sense the performance of said functional means at least during said test programme, said sensing means being adapted to provide a fault signal on occurrence of one of said functional means operating in an incorrect manner.

Preferably the control circuit further comprises indicating means adapted to indicate the presence of a fault and, in a preferred embodiment, said indicating means is adapted to indicate the nature of the fault in as much as it provides information relating to which of the functional means is not operating correctly.

Conveniently, said sensing means and said indicating means may be adapted to provided sensing of the functional means and indication of a fault should it occur during the normal programmes which the machine is adapted to perform.

It is preferred that the control circuit programming, and sensing means (or a substantial part of each of these means) be incorporated to form part of a micro processor. This enables the testing and the fault indicator facility to be provided economically in comparison with what would be possible by the use of a purpose designed integrated circuit unit and a plurality of "hard wired" subordinate circuits each associated with, and forming part of, a particular one of the functional means. There may nevertheless be some hard wired components in sub-circuits associated with and forming part of respective functional means, although the preponderance of the electrical functions to be performed would be carried out and in and by the micro processor.

A further preferred feature of the invention is that the sensing means continually monitors the performance of at least some of the functional means concerned during a normal programme, and in the case of a fault occurring, if necessary stops the programme, the indicating means indicating the nature of the fault.

Preferably the bringing of test programme into operation is effected by means of a switch or other means which is of a character, or is so located in the control circuit or apparatus, as not to form a normal user's control (it may be confined to use by service personnel), for example by mounting the switch or other control means for the test programme in a compartment or at a location in the machine to which access can be had only through an openable closure member normally retained in its closed position under the control of a lock.

It will of course be understood that certain functional means may not be capable of being subjected to an acceleration at the rate of performance of their function, for example a heater may necessarily require to be energised for a predetermined time in order to bring an associated element or material up to a predetermined temperature. Other functional means, for example those involved in performance of a washing operation where relative motion is established between a washing liquid and articles to be washed, may however be operated for a much shorter period than would be the case were a full programme carried out over its normal period.

When the apparatus to which the invention is applied is a washing machine then

(a) the functional means of that apparatus may include the following or any appropriate combination thereof:

(i)    selector means for selecting a programme,

(ii)   fill means for controlling the admission of washing liquid to the machine,

(iii)  heater means for heating the washing liquid,

(iv)   temperature sensing means for sensing the temperature of the washing liquid, (v)    pump means for discharging the washing liquid from the machine,

(vi)   drive means for establishing washing action by relative movement between the washing liquid and the articles to be washed,

(vii)  drive means for establishing distribution of the articles to be washed and/or centrifugal extraction of liquid therefrom.

(b) the testing means may include the following or any appropriate combination thereof:

(i)    means for testing operation of the selector means,

(ii)   means for testing operation of the fill means,

(iii)  means for testing operation of the heater means,

(iv)   means for testing operation of the temperature sensing means,

(v)    means for testing operation of the pump means,

(vi)   means for testing operaton of the first said drive means,

(vii) means for testing operation of the second said drive means.

It will be understood that in certain cases, for example clothes washing machines, in the drive means and the further drive means referred to above in sub-paragraphs (a) (vi) and (vii), a single drive motor may be utilised and caused to operate the respective drive means in different modes or at different speeds. Thus, for establishing a washing action, the drive motor may be rotated successively in opposite rotational senses for establishing washing action and for establishing distribution of the articles for centrifugal extraction of the washing liquid may be rotated unidirectionally and at a speed higher than the speed involved in the washing action.

The apparatus may further include a plurality of electrically energised functional means for performing respective operations in accordance with the programme or any one of a plurality of programmes, a control circuit comprising:

    a. means (herein called programming means) for furnishing control signals in accordance with the programme or any one of the programmes,

    b. means (herein called indicator means) including

        i. a plurality of visual indicator elements,

        ii. means for rendering the indicator elements operative at one time to provide indication of one characteristic of operation of the apparatus, and operative at another time to provide indication of a different characteristic of operation of the apparatus.

The set of indicator elements may be arranged to provide both the number or other identifying symbol of the wash programme selected, and the character of a fault responsive to generation of a fault signal by the sensing means. Alternatively, or in addition, respective indicator elements may be arranged to provide the number or other identifying symbol of a plurality of optional features of the selected wash programme actually selected, and the character of a fault.

By utilisation of a set, or more than one set, of the indicator elements each to perform this dual function, the display to the user is simplified and manufacturing cost is saved.

The invention will be described with reference to the accompanying drawings wherein:-

FIGURE 1 is a diagrammatic view in side elevation and in vertical cross-section of one embodiment of washing machine in accordance with the invention for performing the method thereof;

FIGURE 2 is a schematic circuit diagram of the control circuit of such washing machine;

FIGURE 3 is a flow diagram representing the sub-routines provided by the micro processor;

FIGURES 4 and 5 are flow diagrams representing a normal programme which can be provided by the micro processor of the control circuit; and

FIGURE 6 is a flow diagram representing the test programme which can be carried out by the micro processor of the control circuit.

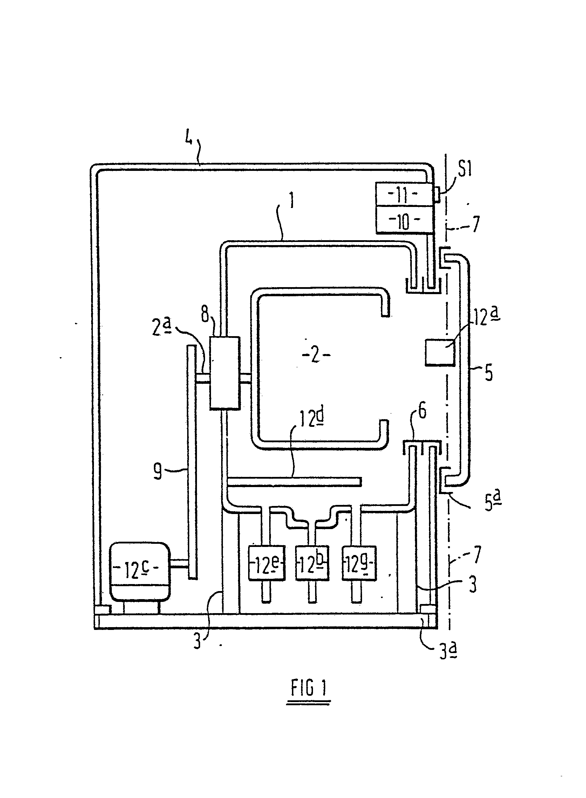

Referring firstly to Figure 1, the washing machine illustrated comprises a body which includes a stationary washing chamber 1 which may be of generally cylindrical form containing a washing drum 2 rotatable about a horizontal axis, the washing chamber being supported in any suitable manner, for example by struts 3 from a base 3a.

A casing 4 encloses the washing chamber and drive means for the drum which comprises a motor 12c which drives the drum spindle 2a through the intermediary of a belt and pulley drive 9. The spindle 2a and the drum is supported by a suitable bearing 8 carried by the washing chamber.

The washing chamber has a plurality of inlets, for example hot water inlet controlled by a solenoid valve 12e, a cold water inlet controlled by a solenoid valve 12g and a drain outlet preferably communicating with a well or sump in the washing chamber and controlled by an electrically driven pump 12b.

The washing chamber 1 is sealed with respect to the casing by a flexible gasket or sealing ring 6 and the entrance to the washing chamber 1 and drum 2 is controlled by a door 5 which is hingedly connected to the casing 4 about a vertical axis 7 and is movable upon release of a solenoid controlled door lock 12a between the closed position shown and an open position. Associated with the door is a sealing ring or gasket 5 operative between the door and the casing.

A further functional unit seen in Figure 1 is a heater 12d for heating the liquid in the washing chamber. Other electrically energised functional units are omitted from Figure 1 merely for the sake of simplicity and may include a solenoid operated conditioner valve controlling the flow of conditioning liquid through a duct into the washing chamber.

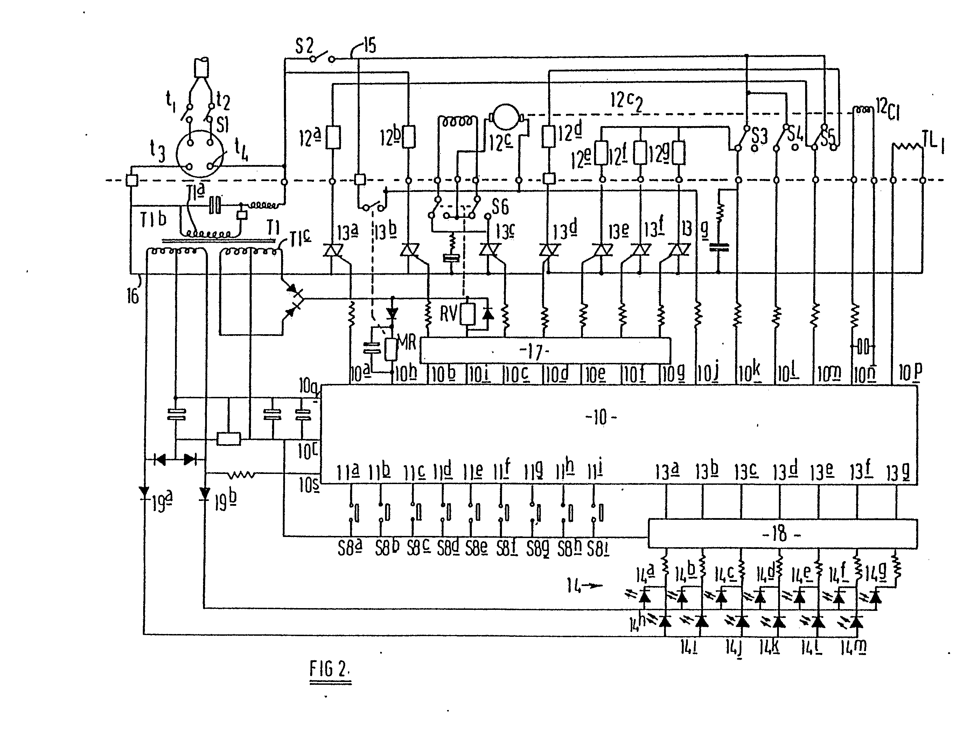

Referring now to Figure 2, the electrically energised functional units are identified at 12a to 12g. The supply of current to these units from a 240 volt alternating current mains is connected to the input terminals t1, t2 of a main manually operable isolator switch S1, the output terminals t3, t4 of which are connected to the primary winding of power supply transformer T1 and also to power supply rails 15 and 16, in the latter case through the intermediary of a switch S2 operated by door release solenoid 12$\underline{a}$.

The supply of current to the functional units 12$\underline{a}$ to 12$\underline{g}$ from the conductors 15 and 16 is controlled by respective gate controlled semi-conductor devices 13$\underline{a}$ to 13$\underline{g}$ respectively in accordance with the output signals developed at the outlets of control circuits incorporating a micro processor 10 and designated 10$\underline{a}$ to 10$\underline{g}$ respectively. In the case of functional units 13$\underline{b}$ to 13$\underline{g}$ these outputs are fed through the intermediary of an output driver 17. Associated with the functional devices are a number of supplementary devices which control or contribute to the function performed by the functional devices, these being high, medium and low level switches S3, S4, S5 serving respectively to control current to the hot water solenoid valve 12$\underline{e}$, cold water solenoid valve 12$\underline{f}$ and heater 12$\underline{d}$ and which provide inputs to the micro processor at terminals 10$\underline{k}$, 10$\underline{l}$, 10$\underline{m}$ to control the liquid levels in the drum. A further supplementary device is a tacho generator 12$\underline{c}_1$ operatively coupled mechanically as indicated by the broken line 12$\underline{c}_2$ to drive motor 12$\underline{c}$ and providing an input to the micro processor at terminal 10$\underline{n}$.

A further supplementary device is a thermistor Th$_1$ which senses the temperature of the washing liquid in the washing chamber and provides an input to the micro processor at terminal 10$\underline{p}$.

The direction of energisation of the field winding F of the drive motor 12$\underline{c}$ is controlled by a further supplementary device, namely a relay RV having reversing contacts S6 and powered from secondary winding T1$\underline{c}$, trans-

former T1 (44 volts). The relay RV is operated under the control of the output at micro processor terminal 10i. The magnitude of the current in the motor is controlled by the output at terminal 10c of the micro processor 10 and current supply to the motor is isolated by a master relay MR having switch contacts S7.

For bringing the washing machine into operation in accordance with the required programme, a series of switches, preferably of the press button type, S8a to S8i provide inputs at terminals 11a to 11i respectively for initiating the following programmes or operations, namely cancel, open door, rinse hold, test, half load, bio, prewash, start, and programme, the significance of which is explained hereinafter.

Indicator means 14 are provided comprising a plurality of electrically energisable indicator elements, for example light emitting diodes 14a - 14g which constitute a 7 segment numerical indicator and elements 14h - 14m which consist of single light emitting diodes, both sets of light emitting diodes being controlled by outputs at terminals 13a - 13g of the micro processor through the intermediary of a display power driver. The two sets of display elements, namely 14a - 14g and 14h - 14m are each supplied respectively by alternate half cycles of the A.C. electricity supply from transformer secondary T1b via diodes 19a and 19b.

The programming provided by the micro processor 10 is such that certain of the display elements provide different classes of information at stages of operation of the machine. Thus before and during programme selection the single L.E.D.'s 14h - 14m indicate options for selection whilst the LED's 14a - 14g providing the seven segment numerical indicator will indicate the identification number of the wash programme. After start the single L.E.D.'s 14h - 14m indicate progress of the selected wash programme as described later. If a fault develops, the seven segment numerical indicator display is then used to indicate this fact by flashing alternatively 'F' and a code number signifying the nature of the fault.

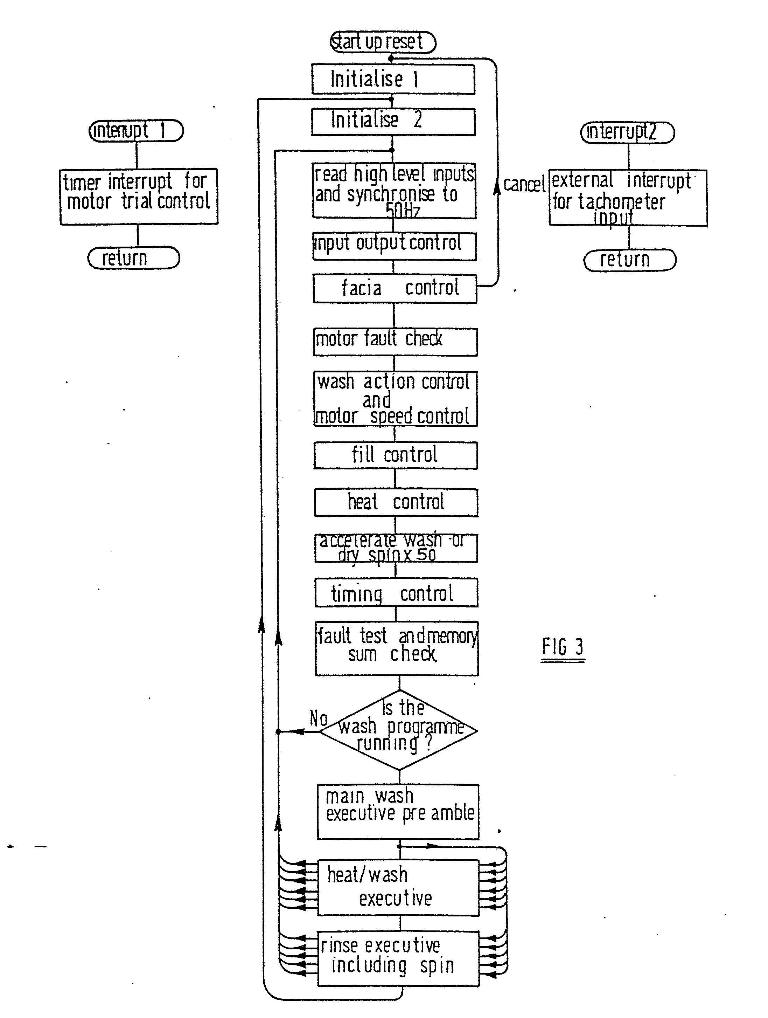

The architecture of the micro processor 10 is most conveniently comprehended by reference to the flow diagrams shown in Figures 3, 4 and 5 before referring to the former of these it is convenient briefly to refer to the setting up of the machine by the operator to carry out the required programme as follows.

The flow diagram of Figure 3 represents graphicaly the complete set of sub-routines provided by the micro processor.

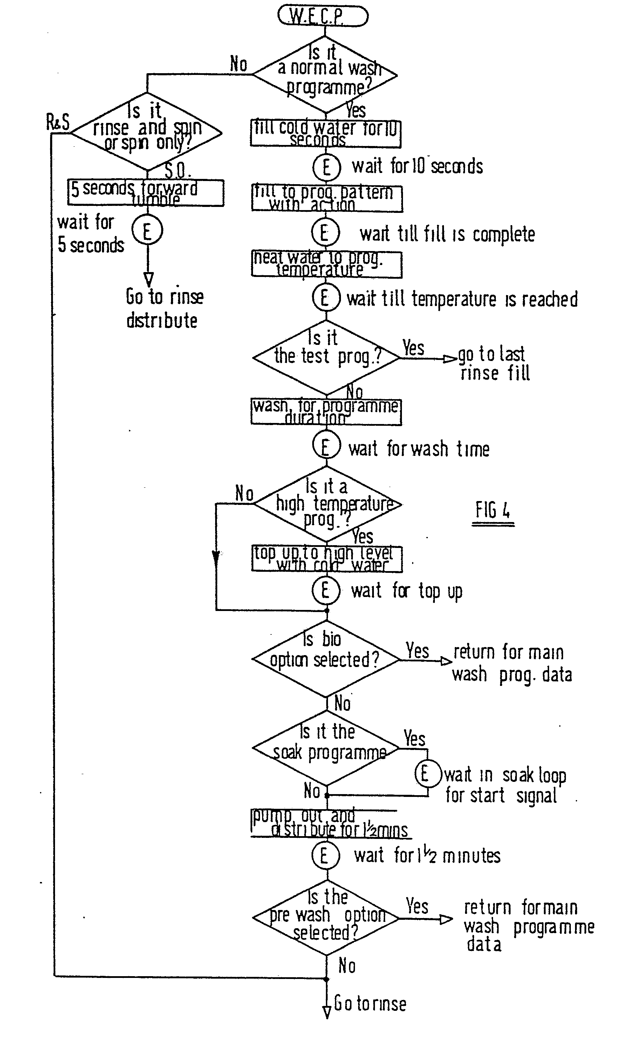

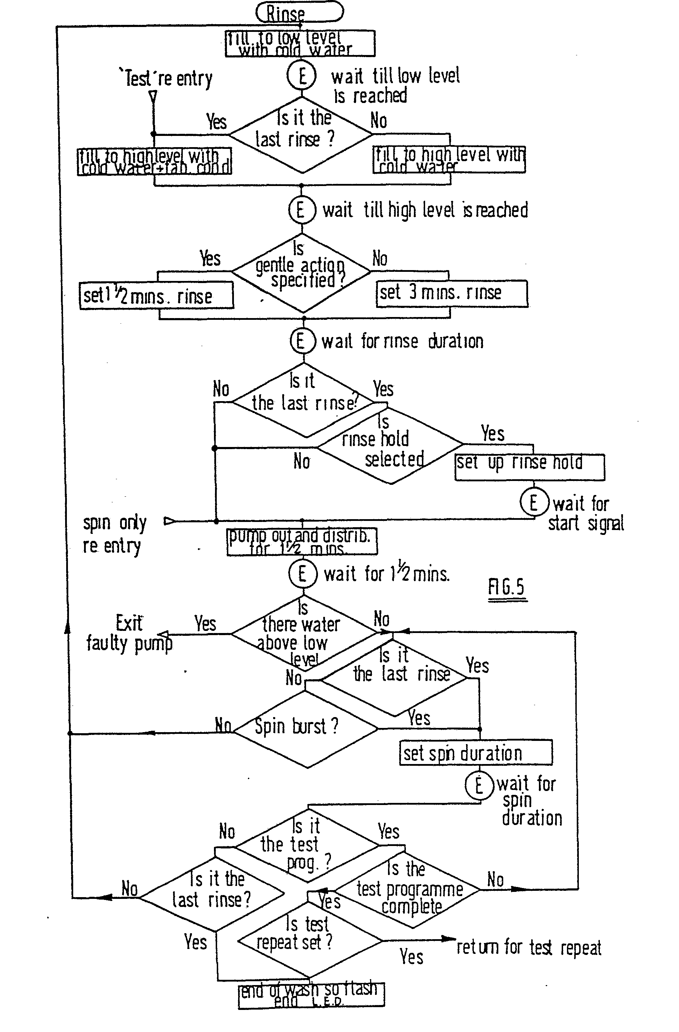

The flow diagrams seen in Figures 4 and 5 represent graphically the main wash executive programme provided by the micro processor.

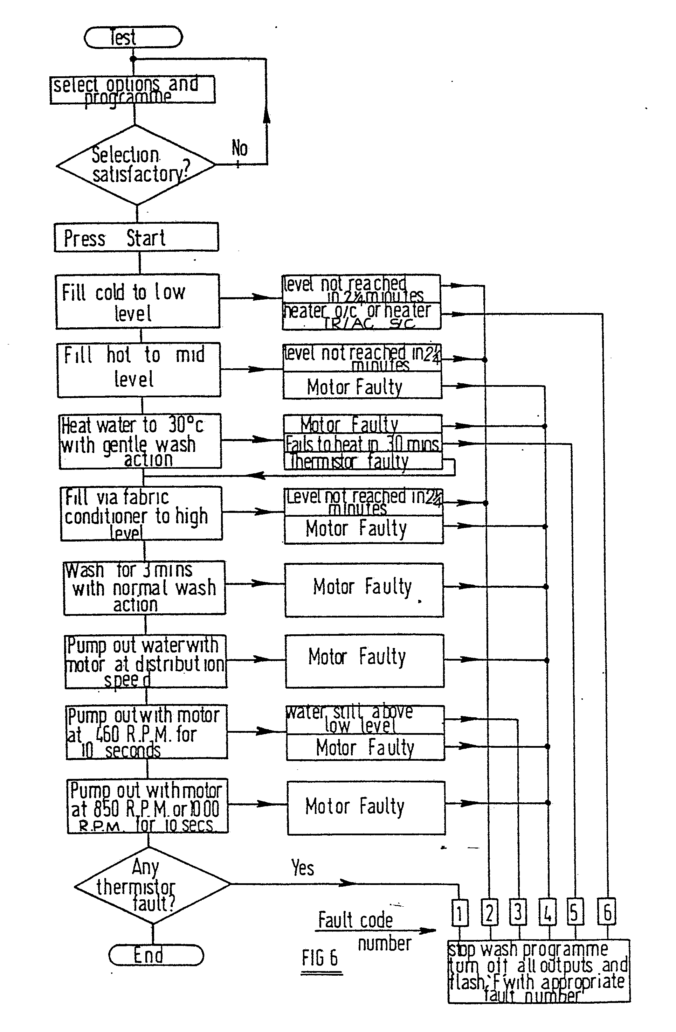

Figure 6 is a similar flow diagram representing the programme which provides fault indication.

Blocks with round ends designate Start or Stop operations, rectangular blocks designate non-decision operations which are carried out, diamond-shaped blocks designate interrogations to determine the route which will be determined by the programme and the various options selected and circular blocks designate exits to await actions by the functional units to be controlled and circuitry external to the micro processor.

The programmes are divided into three sections:-

1. Basic action subroutines.
2. Wash control executive.
3. Interrupts a) External used for tachometer input.

   b) Timer used for motor triac phase angle control.

## Basic action Subroutines

These consist of all the control calculations for:-

1. Synchronisation with 50 Hz at each zero crossing points (100 times per second) and reading of the high level inputs.
2. Energising of relevant output drives other than the motor and scanning of facia switches.
3. Updating displays or other actions dependent on the status of the facia inputs.
4. Testing the tacho status to establish the correct operation of the motor under all conditions.
5. Selection of motor control parameters, wash action (reversing relay) timing and motor speed control.
6. Selection of levels and valve patterns to fill to required state. (includes fault checks by timeout)
7. Temperature measurement and heater control. (includes o/c or s/c thermistor tests, heater failure by timeout and, in the non-heating mode, tests for s/c heater triac)
8. Acceleration of wash or dry spin actions by a factor of 50.
9. All timing, derived from, the 50 Hz supply.
10. Fault testing dependent on the checks in sub-routines 4,7, and 8 and pump test in main executive before spin.

Wash Control Executive

This routine has three parts:-

1. Preamble to update the progress display data and establish timer or flag status for further progress.

2. The heat/wash cycle setting up data for fill, temperature control, wash actions and wash duration.

3. Rinse cycle setting up data for fill pattern, rinse action and duration, spin speeds and duration.

Interrupts

These by their nature run assynchronously with the rest of the programme.

1. External interrupt operates every time the tacho input changes low level - high or high to low.

2. Timer interrupt is restarted at every synchronisation with 50 Hz and generate an interrupt at a time interval dependent on the motor control equation result, calculated in subroutine 5. When the interrupt occurs an output is made to the motor triac.

Initialise

This routine is accessed automatically at power on and clears all registers or outputs to the correct quiescent state. It is used in the event of a cancel from the facia or partially at the end of a main wash programme.

General Operation

The basic subroutines of the general programme are repeated every half cycle of the 50 Hz mains commencing with synchronisation to the zero crossing point. When no wash programme is running the general subroutines are scanned but no actions are initiated. As programmes or options are selected the displays are updated but no other data is accessed until the start button is pressed. When this happens the main wash programme is accessed and proceeds to the first exit point. The programme then returns to the basic loop, synchronises to 50 Hz and scans through the action subroutines updating any changes. On reaching the end of the W.C.P. preamble the programme jumps back to the exit point checks to see if the action under operation is complete. If not complete the programme repeats the loop just described until complete. The wash programme then proceeds to the next exit point and the same sequence is repeated through to the end of the programme. When the action routines (fill, heat, motor) are operating they have inherent fault checks so that should any hazard arise the whole sequence is terminated, all actions turned off and the appropriate fault code displayed. The only exception to this is the pump failure which would be detected prior to a spin cycle in the rinse section of the main wash control programme.

Programme Selection

The programme selection is effected by means of a single control (button), e.g. S8i, which is held in its operated position until the required programme number, letter or other designation appears on a seven segment numerical indicator, e.g. indicator element 14a - 14g.

The indications provided are as follows.

| Indications::- | 0 | No programme. |
|---|---|---|
| | 1-9 | HLCC programme. |
| | $\overline{0}$ | Soak. |
| | E | Quick Wash. |
| | A | 3 minute rinse and high speed spin |
| | P/A | $1\frac{1}{2}$ minute rinse and low speed spin. |

| P/O | Prewash only. |
| P/1-E | Prewash and programme |
| H | High speed spin only. |
| L | Low speed spin only. |
| = | Test routine. |
| F1 | Thermister faulty. |
| F2-6 | Various machine faults. |

A totally blank display indicates power off or controller failure.

## START

A momentary depression of the start push-button control S8b starts the selected programme sequence, isolates all functional setting buttons other than "Start" (used to clear Rinse hold) and cancel (used to cancel the sequence if required), and effects transfer of function of the indicator means 14h - 14m from indicating programme options to indicating programme progress. For example, if in selecting the programme the control marked "Bio" is depressed an indicator element, e.g. 14k, will be illuminated but once the Start button has been depressed the indicator elements 14h - 14m will be illuminated in sequence to designate the following stages, namely Heat, Wash, Rinse 1, Rinse 2, Rinse 3 and End.

### Pre-wash

The pre-wash programme can be selected alone or prior to any of the other programmes except Test or Spin only. It is selected by operation of push-button S8c and indicated by indicator element 14l (prior to depression of the Start button). If selected with Rinse and Spin it modifies the wash action and duration, and spin speed and duration but does not add pre-wash before the Rinse and Spin cycle.

### Bio wash

This can be selected with any programme except Test, or Spin only, and causes the Fill to be hot and cold for programmes involving hot fill, further it separates the heat cycle into two stages, namely heat to 30$^{\circ}$C followed by a wash for 10 minutes all with gentle action and then continues heating and washing as normal in respect of the selected programme. This option does not function on Rinse and Spin.

It is selected, as mentioned above, by operation of push-button S8d.

### Half load

This can be selected with any of the HLCC programmes 1 to E but is inoperative for pre-wash or P/A. It causes the low-level and mid-level switches S5 and S4 to be used for control instead of the mid and high level switches S4 and S3. It is selected by operation of push-button S8e.

### Rinse hold

This will operate on any HLCC programme and causes the programme to be stopped prior to distribute and pump on the final rinse sequence. It is selected by operation of push-button S8f and indicated by a corresponding one of the indicator elements, for example 14i (prior to operation of the Start button). When actual rinse holding commences it is indicated by flashing of the indicator element, e.g. 14i. To clear the rinse hold condition the Start button is pressed and then the programme selected proceeds to completion.

### Door release

The door is mechanically locked by a solenoid release latch. Energisation of the solenoid 12a occurs only if

    a.   the water level is below low level in the washing chamber,

    b.   the motor is stationary,

    c.   no programme is running,

    d.   the door release button S8g is pressed.

The door release solenoid is energised via the off contact of the low level switch S5 and the door switch S2 and thus can be energised only long enough to release the door lock mechanism. An indication "door may be opened" is provided by one of the indicator elements, e.g. 14h, which is energised continuously,i.e.providing a steady illumination, before any programme is selected and is energised intermittently, i.e. providing flashing illumination, after a programme has been completed but before the door has been opened once. The opening of the door effects resetting of the control so that these are ready to select another programme.

## Cancel

Operation of the push-button S8h causes immediate cancellation of data before the Start button S8b is pressed and has to be held in the operated position for a predetermined period, e.g. 2.5 seconds, before it will effect cancellation of a running programme. Direct connection to the outlet 10b controlling the semiconductor device 13b for the pump 12b allows the pump to be operated independently under any conditions when the power is on.

## Progress display

As mentioned certain of the indicator elements, namely 14h to 14m, are used at different stages to provide indication of different characters. The first is to indicate programme progress and the devices are energised respectively in sequence to indicate progression of Heat, Wash, Rinse 1, Rinse 2, Rinse 3 and End of a programme.

If a programme including Bio is selected or a programme including Pre-wash, indicator elements applicable to the heat part of the programme and the wash part of the programme are energised cylically until the heat and wash parts of the programme are completed, i.e. heat, wash for bio or pre-wash, then blank followed by heat, wash for the main wash programme.

## Soak

As mentioned above, this programme is basically a pre-wash with hot and cold high fill and a hold at the end of a 10 minute wash cycle. During the hold, action is limited to one wash action every 10 minutes, the wash action typically occupying 30 seconds. To end the soak period the start button is pressed. The machine then pumps out and automatically continues with three rinses and a 2 minute slow spin. Any option other than rinse hold may be added to the programme. Bio gives a 20 minute gentle wash at $30^0$C followed by the soak. Pre-wash and half load operate normally. The indicator elements energised in sequence during the soak programme and Heat 14m, Wash 14l followed by the three rinse indicator elements 14k to 14i. During soak the indicator elements 14m and 14l are permanently energised and indicator element 14i flashes on and off once per second.

Referring now to the washing programmes which can be provided under the control of the micro processor, the latter is an example of such a programme.

1. Fill cold for 10 seconds no action.
   Fill hot to mid level with action.
   Heat to 85°C with gentle action.
   Wash for 12 minutes normal action.
   Fill cold to high level with action.
   Pump spin at 95 r.p.m. for 1 minute 30 seconds.

2. Fill cold to low level without action.
   Continue filling to high level with action.
   Rinse for 3 minutes.
   Pump spin at 95 r.p.m. for 1 minute 30 seconds.
   Pump spin at 850 r.p.m. for 10 seconds.
   Pump out with cold valve for 15 seconds.

3. Fill cold to low level without action.
   Continue filling to high level with action.
   Rinse for 3 minutes.
   Pump spin at 95 r.p.m. for 1 minute 30 seconds.
   Pump spin at 850 r.p.m. for 10 seconds.
   Pump out with cold valve open for 15 seconds.

4. Fill cold to low level without action.
   Comfort valve operated.
   Continue filling to high level with action.
   Rinse for 3 minutes.
   Pause until start is operated, if rinse hold is selected.
   Pump spin at 95 r.p.m. for 1 minute 30 seconds.
   Spin pump for 4 minutes at 850 r.p.m.

In the above it will be understood that in the sequence referred to in sub-paragraph 1, reference to "fill cold" and "fill hot" includes the addition of a washing powder or detergent as required. The reference to "action" means rotation of the drum firstly in one direction and then in the other. The reference to "pump spin" means operation of the discharge pump accompanied by spinning of the drum. In sub-paragraphs 2 to 4 the reference to "fill cold" means filling with cold water not accompanied by any detergent.

It will be noted that the programme includes a wash sequence (as defined in sub-paragraph 1 above) in which the action for wash is continued for periods which are typically 5 to 12 minutes and thereafter three rinse sequences follow as typically specified in sub-paragraphs 2 to 4 inclusive.

It will be appreciated that the above described programme is just one example of many different programmes which the micro processor may provide. Different programmes may alter various aspects of the programme, the typical variable parameters being as follows.

     a.  the level to which water is added,

     b.  the temperature to which the water is heated,

     c.  the length of time for which washing, rinsing, soaking, may take place,

     d.  the spin speed,

     e.  the number of spins and rinses.

In order that, should a fault occur in the machine, it may be located in as short a time as possible, the micro processor is also adapted to perform a test programme in which programme the rate of performance of the various functional units of the machine is considerably accelerated.

A flow diagram illustrating the test programme is shown in Figure 6 and the, sequence of operations are as follows.

| ACTION | TESTS |
|---|---|
| 1. Fill cold to low level. | Cold valve and low level no operation if cold valve faulty or low level open cot. Fault code F2. |
| 2. Fill hot to mid level with action. | Hot valve, mid level and motor. Fault codes F2 or F4. |
| 3. Heat to 30°C + gentle action. | Heater, thermistor and motor fault codes F5, F4 or F1. |
| 4. Fill via fabric conditioner valve + cold valve to high level + action. | Fabric conditioner valve, motor and high level F2 or F4. |
| 5. Wash for 3 minutes with normal action. | Motor action. F4. |
| 6. Pump and distribute for 1½ minutes. | Pump and motor at distribute speed. F4. |
| 7. Pump and spin at 460 r.p.m. for 10 seconds. | Pump and motor at low spin speed. F3 or F4. |
| 8. Pump and spin at 850 r.p.m. for 10 seconds. | Pump and motor at high spin speed. F4. |

An open circuit heater or short circuit heater triac would be indicated by fault code F6 when the low level is reached. F6 at switch on indicates no power to the level switch or open circuit low level input. An open circuit or short circuit thermister is indicated by fault code F1 at the end of the test programme. Any fault occurring between heat and the end will override a thermister fault.

F5 indicates failure to heat, most probable cause would be open circuit heater triac. This takes 30 minutes to occur on $30^{\circ}C$, $40^{\circ}C$, $50^{\circ}C$, programmes and 1 hour on the $60^{\circ}C$ and $85^{\circ}C$ programmes.

The fault codes F1 to F6 above referred to are indicated by energisation of respective indicator elements, e.g. 14a to 14g of the seven segment display.

The total time for the test sequence depends on water pressure and inlet temperature of the hot water but is approximately 10 minutes.

The operation of the test programme may be brought into effect by operation of a control such as a push-button switch which may or may not be accessible to the muser of the machine if it is intended that the test programme should be solely for the use of experienced service personnel.

It can be seen from the flow diagram and the above description of the test programme that all the functional units of the machine are brought into operation in as short a time as possible so that each such functional unit can be tested as to its performance and should a fault have occurred, not only the presence of such a fault will be indicated, but by the code displayed the nature of the fault will also be indicated.

Should the fault occurring give rise to the possibility that, either damage would occur to the machine if use was continued, or a possible danger to the contents of the machine, for example clothes being washed, or a danger to the person using the machine, then the micro processor may be so programmed to disconnect the supply to the machine or otherwise render the machine inoperative and in a safe condition.

The manner in which the operation of the various functional units of the machine are monitored by the sensing means which is incorporated in the micro processor will be such that they give a reliable indication of whether or not that particular functional unit is operating satisfactorily.

For example, in the case of the motor adapted to rotate the drum, the speed is sensed by a tacho generator providing an electrical output dependent on the speed of revolution of the motor. The micro processor can be programmed such that the output from said tacho generator is compared with a stored signal and if at any required speed, for example tumbling speed, slow spin speed, high spin speed, the signal obtained from the tacho generator does not correspond with the stored signal then a fault will be displayed by the indicating means.

The water temperature sensor may comprise a thermostat or a plurality of thermostats adapted to open or close at predetermined temperatures. The state of said thermostat or thermostats, i.e. whether it is open or closed, will be registered by the micro processor and compared with a predetermined expected state at a particular time in the programme and, once again if the state of the thermostat does not comply with the expected state, a fault signal may be displayed.

An alternative method of sensing water temperature would be to provide a device such as a thermister, the electrical resistance of which changes in accordance with the temperature of its surroundings, in this case the water within the drum and the current passing in a circuit through the thermo-resistor would accordingly be varied. The current may be monitored by the micro processor preferably after having been converted to a digital signal and the expected value of said current compared with predetermined values at different stages during the programme.

The height of water level within the drum may be monitored by a pressure switch adapted to open or close at a predetermined water level height. Once again the condition of the pressure switch may be monitored by the micro processor and, if at any stage during the programme the state of that pressure switch is not in accordance with an expected value, a fault signal may be generated, the indicating means informing the user of the presence of a fault.

The water temperature sensing means themselves may be tested by sensing the rate of temperature change sensed by the water temperature sensors, for example a thermistor. Provided the heater is working satisfactorily, for a constant volume of water, the rate of temperature change between two set values will be a known value apart from minor variations caused by outside influences such as ambient temperature. If, therefore, the rate of change is significantly different and, the value is compared with an expected value, the fault signal may be provided in which Fault is displayed on the indicating means.

Means for testing operation of the pump may include a further tachometer, if the pump is driven by its own motor, the sensing of the value provided by the tachometer and issue of a fault signal being as afore described with reference to the motor operation for driving the drum.

An alternative method of testing pump operation is to determine whether the level of liquid within the drum falls after the programmer has instructed the pump to operate. If, for example, the water level does not drop to a certain level after a predetermined period of time and, in so doing operating a pressure switch, for example, then it would appear the pump is not working satisfactorily and a fault signal to the indicating means indicating that the pump is faulty will issue.

It will be appreciated that a single unexpected result from a sensor, i.e. a water temperature sensor, could indicate several different faults, for example if the water temperature was lower than expected then it could be that

(a) the heater is not operating satisfactorily,
(b) the amount of water in the drum is excessive indicating either a pressure switch for example is inoperative inoperating incorrectly, or the valve means connecting the supply of water to the drum is faulty.

Thus, in order to determine the nature of the fault, and in particular which functional unit is operating incorrectly, it is necessary for the micro processor to compare the signals from various sensors and isolate the faulty functional unit. The ability of micro processors to receive and compare signals and store the result therefrom renders them highly suitable for inclusion in the control circuit of the present invention.

It is envisaged, however, that a machine could operate in accordance with the present invention using a conventional electro-mechanical programmer in which a plurality of switches are operated in sequence by rotary switch or cam means rotating on a shaft. The shaft is rotated by a motor at a low speed and in this case switching means may be provided to isolate the switching means used in a normal programme and bring into operation separate switches in which the rate of performance of the functional units is accelerated. For example, in the case where a conventional programme may last for half an hour being the time taken for one complete revolution of an electro-mechanical programmer, a set of switches may be provided all of which are operated within 10 minutes, the switches however bring into operation the majority or all the functional units of the machine for the purposes of testing their performance.

The means for monitoring the performance of the various functional units may be as afore described and in the case of the correct operation of the motor may comprise a tacho generator using an output dependent on speed of revolution of the motor, in the case of the water temperature may comprise thermostats or thermistors, pressure switches detecting the level of water within the drum and the current supplied to the heater element also being monitored.

As mentioned the test programme may be brought into effect by operation of a control such as a push-button switch not excessible to the user. It provides two facilities.

1. This is a no wash programme in which a memory sum check is carried out on the memory incorporated in the micro processor and display of the result effected on the programme display, e.g. elements $14\underline{a}$ - $14\underline{g}$ (i.e. the number 11 is displayed with indicator elements $14\underline{i}$, $14\underline{j}$, $14\underline{l}$, $14\underline{m}$ also on).

2. In this a wash programme is running. The speeds of programme execution are raised by a factor of 50 if the following conditions are satisfied, namely not filling, heating or pumping out with water above low level.  This facility provides
for rapid checking during bench testing after
repair or field servicing.

CLAIMS:-

1. A control circuit in or for machines of the kind specified, said control circuit comprising programming means adapted to furnish control signals in accordance with a selected programme to a plurality of electrically energised functional means for performing respective operations in accordance with said selected programme, characterised in that said programming means includes a test programme, said test programme including accelerator means adapted to accelerate the rate of performance of at least some of the functional means (12a - 12g).

2. A control circuit as claimed in claim 1 characterised in that the control circuit further comprises sensing means adapted to sense the performance of said functional means at least during said test programme, said sensing means being adapted to provide a fault signal on occurrence of one of said functional means (12a - 12g) operating in an incorrect manner.

3. A control circuit as claimed in claim 2 characterised in that the control circuit further comprises indicating means (14a - 14g) adapted to indicate the presence of a fault.

4. A control circuit as claimed in claim 3 characterised in that said indicating means (14a - 14g) is adapted to indicate which of the functional means (12a - 12g) is operating incorrectly.

5. A control circuit as claimed in claim 2 characterised in that the programming means and the sensing means are incorporated in a micro processor (10).

6. A control circuit as claimed in claim 2 characterised in that the sensing means continually monitors the performance of at least some of the functional means (12$\underline{a}$ - 12$\underline{g}$) concerned during a normal programme.

7. A control circuit as claimed in any one of the preceding claims characterised in that it is incorporated in, and adapted to control operation of, a machine for washing clothes or other textile articles.

8. A control circuit as claimed in claim 7 characterised in that

    (a) the functional means of that apparatus includes the following or any appropriate combination of a lesser number of the following:

        (i)    selector means (S8$\underline{a}$ - S8$\underline{i}$) for selecting a programme,

        (ii)    fill means (12$\underline{e}$, 12$\underline{g}$) for controlling the admission of washing liquid to the machine,

        (iii)    heater means (12$\underline{d}$) for heating the washing liquid,

        (iv)    temperature sensing means (Th1) for sensing the temperature of the washing liquid,

        (v)    pump means (12$\underline{b}$) for discharging the washing liquid from the machine,

        (vi)    drive means (12$\underline{c}$) for establishing washing action by relative movement between the washing liquid and the articles to be washed,

        (vii)    drive means (12$\underline{c}$) for establishing distribution of the articles to be washed and/or centrifugal extraction of liquid therefrom.

(b) the testing means includes the following or any appropriate combination of a lesser number of the following:

    (i)     means for testing operation of the selector means,

    (ii)    means for testing operation of the fill means,

    (iii)   means for testing operation of the heater means,

    (iv)    means for testing operation of the temperature sensing means,

    (v)     means for testing operation of the pump means,

    (vi)    means for testing operation of the first said drive means,

    (vii)   means for testing operation of the second said drive means.

9. A control circuit as claimed in claim 3 characterised in that the indicator means comprises:-

    (i)     a plurality of visual indicator elements (14$\underline{a}$ - 14$\underline{g}$),

    (ii)    means (10) for rendering the indicator elements (14$\underline{a}$ - 14$\underline{g}$) operative at one time to provide indication of one characteristic of operation of the apparatus, and operative at another time to provide indication of a further or different characteristic of operation of the apparatus.

10. A control circuit as claimed in claim 1 characterised in that the bringing of the test programme into operation is effected by means of a switch or other control means which is of a character, or is so located in the control circuit or apparatus, as not to form a normal user's control.

0038672

FIG 1

FIG 2.

FIG 3

FIG 4

W.E.C.P.

Is it a normal wash programme?

**No** → Is it rinse and spin or spin only?

**R&S**

**S.O.**

5 seconds forward tumble

wait for 5 seconds (E)

Go to rinse distribute

**Yes** → fill cold water for 10 seconds

(E) wait for 10 seconds

fill to prog. pattern with action

(E) wait till fill is complete

heat water to prog. temperature

(E) wait till temperature is reached

Is it the test prog.? **Yes** → go to last rinse fill

**No**

wash for programme duration

(E) wait for wash time

Is it a high temperature prog.? **No** →

**Yes**

top up to high level with cold water

(E) wait for top up

Is bio option selected? **Yes** → return for main wash prog. data

**No**

Is it the soak programme **Yes** → (E) wait in soak loop for start signal

**No**

pump out and distribute for 1½ mins

(E) wait for 1½ minutes

Is the pre wash option selected? **Yes** → return for main wash programme data

**No**

Go to rinse

5/6

FIG.5

0038672

/6

FIG 6